# EUROPEAN PATENT SPECIFICATION

(11) **EP 1 572 362 B1**
(45) Date of publication and mention of the grant of the patent: **22.05.2019**
(21) Application number: 03796045.7
(22) Date of filing: 24.11.2003
(51) Int. Cl.: B01J 37/02, B01J 35/02, B01J 21/06, B01J 21/08

(54) **PROCESS FOR PREPARING AN EPOXIDATION CATALYST AND PROCESS FOR PREPARING EPOXIDES**
VERFAHREN ZUR HERSTELLUNG EINES EPOXIDIERUNGSKATALYSATORS UND VERFAHREN ZUR HERSTELLUNG VON EPOXIDEN
PROCEDE DE PREPARATION D'UN CATALYSEUR D'EPOXYDATION ET PROCEDE DE PREPARATION D'EPOXYDES

(30) Priority: 02.12.2002 EP 02258294
(43) Date of publication of application: 14.09.2005
(73) Proprietor: Shell Internationale Research Maatschappij B.V., 2596 HR The Hague (NL)
(72) Inventor: BUIJINK, Jan Karel Frederik, NL-1031 CM Amsterdam (NL); JANSSEN, Frank Joan, NL-1689 EP Zwaag (NL)
(86) International application number: PCT/EP2003/050877
(87) International publication number: WO 2004/050241

(56) References cited:
- EP-A- 0 345 856
- EP-A- 0 734 764
- WO-A-98/50374
- US-B1- 6 383 966

## Description

The present invention relates to the preparation of an epoxidation catalyst and to the process of preparing alkylene oxide with the help of such catalyst.

### Background of the Invention

An epoxidation catalyst is understood to be a catalyst which catalyses the manufacture of an epoxy group containing compound. A well known process comprises contacting organic hydroperoxide and alkene with a heterogeneous epoxidation catalyst and withdrawing a product stream comprising alkylene oxide and an alcohol.

Catalysts for the manufacture of an epoxy group containing compound, are well known. EP-A-345856 describes the preparation of such catalyst comprising impregnating a silicium compound with a stream of gaseous titanium tetrachloride preferably comprising an inert gas. In the example, it is mentioned that dried silica is used.

US-A-6,114,552 teaches the use of a high surface area silica support or the like having a surface area greater than 1100 m²/g in preparing epoxidation catalysts. The high surface area solid is impregnated with either a solution of a titanium halide in a non-oxygenated hydrocarbon solvent or a gas stream of titanium tetrachloride. It is mentioned that it is desirable to dry the silica support prior to impregnation, for example by heating for several hours at a temperature of at least 200 to 700 °C. The exemplified silica supports to be impregnated with gaseous titanium tetrachloride, were dried at 450 °C in air.

US-A-5,932,751 describes the preparation of titanium on silica catalysts in which the silica has been washed prior to the deposition of the titanium component thereon. A solution is used for depositing the titanium component.

There is a continuous interest in improving the selectivity of epoxidation catalysts in general, and more specifically of catalysts for the preparation of alkylene oxide. We found a simple and attractive way to achieve this.

### Summary of the Invention

Surprisingly it was found that the selectivity of an epoxidation catalyst is influenced by the way in which the silica gel carrier has been dried before impregnation. The only information in the prior art on the drying step, is that it is carried out in order to attain a sufficient degree of dryness. There is no teaching or hint that the selectivity of an epoxidation catalyst can be improved by changing the drying conditions before gaseous impregnation. Surprisingly, we found that a more selective catalyst could be obtained if the water was removed from the silica carrier at a specific temperature before the contact with the gaseous titaniumchloride. Without wishing to be bound to any theory, it is thought that drying at this specific temperature creates surface sites which have improved selectivity after having been reacted with gaseous titanium compounds.

Therefore, the present invention relates to a process for the preparation of an epoxidation catalyst, wherein the amount of titanium (as metallic titanium) is in the range of from 0.1 to 10% by weight, based on total weight of the catalyst, which process comprises:
(a) drying a silica gel carrier having a weight average particle size of from 0.1 to 2 millimetre and a surface area of at most 1000 m²/gram at a temperature of from 210 to 290 °C, wherein the drying is carried out during from 15 minutes up to 10 hours;
(b) contacting the carrier obtained in step (a) with a gas stream containing titanium halide to obtain an impregnated carrier;
(c) calcining the impregnated carrier,
(d) hydrolysing the calcined impregnated carrier, and
(e) contacting the carrier obtained in step (d) with a silylating agent.

An advantage of drying at relatively low temperature is the fact that this reduces the time required for preparing the epoxidation catalyst. The present invention is very surprising in view of the benefits of having a low drying temperature and the improved selectivity observed.

A preferred preparation method further comprises that the drying of step (a) is carried out at a temperature which is higher than the temperature at which the impregnation of step (b) is carried out. Such drying ensures that there is no substantial amount of water present during impregnation of the silica gel carrier with titanium halide. This prevents that a substantial amount of the titanium halide reacts with water. Reaction between titanium halide and water makes that titanium compounds are formed which do not contribute to catalysing the epoxidation reaction such as titanium oxide.

A further preferred embodiment comprises supplying an amount of titanium halide in step (b) which is such that the molar ratio of titanium halide added to silicon present in the carrier is of from 0.050 to 0.063.

### Detailed description of the invention

The catalyst prepared by the method of the present invention is obtained by drying of a silica gel carrier, and subsequent impregnation of the carrier.

It is known that contaminants can influence the performance of the final catalyst. It has been found that gas phase impregnation according to the present invention gives especially good results if the silica carrier contains at most 1200 ppm of sodium, more specifically at most 1000 ppm of sodium. Further, the silica carrier preferably comprises at most 500 ppm of aluminium, at most 500 ppm of calcium, at most 200 ppm of potassium, at most 100 ppm of magnesium and at most 100 ppm of iron.

The silica gel carrier for use in the present invention can in principle be any carrier derived from a silicon containing gel. In general, silica gels are a solid, amorphous form of hydrous silicon dioxide distinguished from other hydrous silicon dioxides by their microporosity and hydroxylated surface. Silica gels usually contain three-dimensional networks of aggregated silica particles of colloidal dimensions. They are typically prepared by acidifying an aqueous sodium silicate solution to a pH of less than 11 by combining it with a strong mineral acid. The acidification causes the formation of monosilicilic acid (Si(OH)₄), which polymerizes into particles with internal siloxane linkages and external silanol groups. At a certain pH the polymer particles aggregate, thereby forming chains and ultimately gel networks. Silicate concentration, temperature, pH and the addition of coagulants affect gelling time and final gel characteristics such as density, strength, hardness, surface area and pore volume. The resulting hydrogel is typically washed free of electrolytes, dried and activated. A suitable silica gel carrier would be silica support V432 and
DAVICAT P-732, which are commercially available from Grace Davison.

The silica gel carrier for use in the present invention has a surface area of at most 1000 m²/gram, more preferably at most 800 m²/gram, most preferably at most 500 m²/gram. Generally, the surface area will be at least 10 m²/gram, more specifically at least 20 m²/gram. Silica gel carriers which were found especially suitable had a surface area of 300 m²/g.

Silica gel carriers having a weight average particle size of substantially more than 2 millimetres, such as silica G 57 ex Grace, were found not to be suitable for use in the present invention. Particle sizes which were found to be especially suitable were weight average particle sizes of from 0.2 to 1.8 mm, more specifically of from 0.4 to 1.6 mm, most specifically of from 0.6 to 1.4 mm.

A further improvement was observed if the silicon containing carrier had been subjected to a pretreatment comprising calcining the silicon containing carrier and subsequently hydrolysing the carrier obtained. Hydrolysis comprises treating the carrier with water or steam. Preferably, the hydrolysis is carried out with steam. Alternatively, the hydrolysis treatment may comprise a washing treatment using an aqueous solution of a mineral acid, an aqueous solution of an ammonium salt or a combination thereof. Any water which might still be present after the hydrolysis, is preferably removed before treating the carrier further. Water is preferably removed by drying. Preferably, the calcination is carried out at a relatively high temperature. The preferred high temperature calcination treatment comprises (a) calcining a silica gel carrier at a temperature of at least 400 °C, (b) hydrolysing the calcined silica gel carrier, (c) impregnating the hydrolysed carrier obtained in step (b) with a titanium-containing impregnating agent, and (d) calcining the impregnated carrier. Preferably, the calcination of step (a) is carried out at a temperature of from 450 to 800°C, more preferably of from 500 to 700°C. If such high temperature calcination treatment is carried out, the drying according to the present invention is carried out on the calcined and hydrolysed carrier.

Drying according to the present invention comprises subjecting the silicon containing carrier to a temperature of from 210 to 290 °C. The time during which the drying is carried out, strongly depends on the kind of silica gel used and the pretreatment of the silica gel. However, the drying will be carried out during from 15 minutes up to 10 hours, more specifically of from 1 to 8 hours, more specifically of from 1 to 5 hours. More specifically, the drying is carried out at a temperature of at least 210°C, preferably more than 210 °C, more preferably at least 220°C, more preferably at least 225°C. The drying temperature is at most 290°C, more preferably less than 290 °C, more preferably at most 280 °C, most preferably at most 275 °C. Most preferably, the drying temperature is about 250 °C.

It was found that the silica gel carrier which had been dried in this way had the kind of surface which gave an excellent catalyst upon impregnation with gaseous titanium halide.

A further improvement was observed if the drying of step (a) is carried out at a temperature which is higher than the temperature at which the impregnation of step (b) is carried out. The impregnation temperature is the temperature of the silica carrier before being brought into contact with the gaseous titanium halide. When the silica carrier is reacting with the titanium halide, the temperature of the carrier increases due to the exothermic nature of the reaction.

Furthermore, it has been found especially advantageous if the amount of titanium halide supplied in step (b) is such that the the molar ratio of titanium to silicon of the carrier is of from 0.050 to 0.063. It has been found that such molar ratio gives a more selective catalyst than similar catalysts of which the dried carrier had been in contact with either more titanium halide or less titanium halide. Without wishing to be bound to any theory, it is thought that this specific molar ratio gives a bonding of the titanium compounds which is especially advantageous for the selectivity of the catalyst.

Generally, the silicon containing carrier is contacted with the titanium halide in the course of from 0.1 and 10 hours, more specifically of from 0.5 to 6 hours. Preferably, at least 30 %wt of the titanium is added during the first 50% of the impregnation time. The time of impregnation is taken to be the time during which the silicon containing carrier is in contact with gaseous titanium halide. Most preferably, the silicon containing carrier is contacted with a similar amount of titanium halide during the full time of the impregnation. However, it will be clear to someone skilled in the art that deviations from this are allowable such as at the start of the impregnation, at the end of the impregnation and for relatively short time intervals during impregnation.

Titanium halides which can be used comprise tri- and tetra-substituted titanium complexes which have of from 1 to 4 halide substituents with the remainder of the substituents, if any, being alkoxide or amino groups. The titanium halide can be either a single titanium halide compound or can be a mixture of titanium halide compounds. Preferably, the titanium halide comprises at least 50 %wt of titanium tetrachloride, more specifically at least 70 %wt of titanium tetrachloride. Most preferably, the titanium halide is titanium tetrachloride.

The present invention comprises the use of a gas stream comprising titanium halide. Preferably, the gas stream consists of titanium halide optionally in combination with an inert gas. If an inert gas is present, the inert gas preferably is nitrogen. Especially selective catalysts were found to be obtainable with the help of a gas stream solely consisting of titanium halide. In such process, the preparation is carried out in the absence of a carrier gas. However, limited amounts of further gaseous compounds are allowed to be present during the contact between the silicon containing carrier and the gaseous titanium halide. The gas in contact with the carrier during impregnation preferably consists for at least 70 %wt of titanium halide, more specifically at least 80 %wt, more specifically at least 90 %wt, most specifically at least 95 %wt.

Gaseous titanium halide can be prepared in any way known to someone skilled in the art. A simple and easy way comprises heating a vessel containing titanium halide to such temperature that gaseous titanium halide is obtained. If inert gas is to be present, the inert gas can be led over the heated titanium halide.

The impregnated carrier will be calcined and subsequently hydrolysed and silylated before being used as a catalyst. Therefore, the present invention relates to a process comprising (c) calcining the impregnated carrier obtained in step (a), (d) hydrolysing the calcined impregnated carrier, and (e) contacting the carrier obtained in step (d) with a silylating agent.

It is believed that calcination removes hydrogen halide, more specifically hydrogen chloride which is formed upon reaction of titanium halide and silicon compounds present on the surface of the silicon containing carrier.

The calcination of the impregnated carrier generally comprises subjecting the impregnated carrier to a temperature of at least 500 °C, more specifically at least 600 °C. Preferably, the calcination is carried out at a temperature of at least 650 °C. From a practical point of view, it is preferred that the calcination temperature applied is at most 1000 °C.

Hydrolysis of the impregnated and calcined carrier can remove Ti-halide bonds. The hydrolysis of the impregnated carrier generally will be somewhat more severe than the hydrolysis of the carrier before impregnation. Accordingly, this hydrolysis of the impregnated carrier is suitably carried out with steam at a temperature in the range of from 150 to 400 °C.

The hydrolysed impregnated carrier is subsequently silylated. Silylation is carried out by contacting the hydrolysed impregnated carrier with a silylating agent, preferably at a temperature of between 100 and 425 °C. Suitable silylating agents include organosilanes like tetra-substituted silanes with C₁-C₃ hydrocarbyl substituents. A very suitable silylating agent is hexamethyldisilazane. Examples of suitable silylating methods and silylating agents are, for instance, described in US-A-3,829,392 and US-3,923,843 which are referred to in US-A-6,011,162, and in EP-A-734764.

The amount of titanium (as metallic titanium) will normally be in the range of from 0.1 to 10% by weight, suitably 1 to 5% by weight, based on total weight of the catalyst. Preferably, titanium or a titanium compound, such as a salt or an oxide, is the only metal and/or metal compound present.

As mentioned above, it is well known in the art to produce alkylene oxides, such as propylene oxide, by epoxidation of the corresponding olefin using a hydroperoxide such as hydrogen peroxide or an organic hydroperoxide as the source of oxygen. The hydroperoxide can be hydrogen peroxide or any organic hydroperoxide such as tert-butyl hydroperoxide, cumene hydroperoxide and ethylbenzene hydroperoxide. The alkene will generally be propene which gives as alkylene oxide, propylene oxide. The catalyst prepared according to the present invention has been found to give especially good results in such process. Therefore, the present invention further relates to a process for the preparation of alkylene oxide which process comprises contacting a hydroperoxide and alkene with a heterogeneous epoxidation catalyst and withdrawing a product stream comprising alkylene oxide and an alcohol and/or water, in which process the catalyst is prepared according to the present invention.

A specific organic hydroperoxide is ethylbenzene hydroperoxide, in which case the alcohol obtained is 1-phenyl ethanol. The 1-phenylethanol usually is converted further by dehydration to obtain styrene.

Another method for producing propylene oxide is the co-production of propylene oxide and methyl tert-butyl ether (MTBE) starting from isobutane and propene. This process is well known in the art and involves similar reaction steps as the styrene/propylene oxide production process described in the previous paragraph. In the epoxidation step tert-butyl hydroperoxide is reacted with propene forming propylene oxide and tert-butanol. Tert-butanol is subsequently etherified into MTBE.

A further method comprises the manufacture of propylene oxide with the help of cumene. In this process, cumene is reacted with oxygen or air to form cumene hydroperoxide. Cumene hydroperoxide thus obtained is reacted with propene in the presence of an epoxidation catalyst to yield propylene oxide and 2-phenyl propanol. The latter can be converted into cumene with the help of a heterogeneous catalyst and hydrogen. Specific suitable processes are described for example in WO 02/48126.

The conditions for the epoxidation reaction according to the present invention are those conventionally applied. For propene epoxidation reactions with the help of ethylbenzene hydroperoxide, typical reaction conditions include temperatures of 50 to 140 °C, suitably 75 to 125 °C, and pressures up to 80 bar with the reaction medium being in the liquid phase.

The invention is further illustrated by the following Examples.

### Examples 1 and 2

The silica gel carrier used in the examples had a surface area of 300 m²/g and a weight average particle size of about 1 mm. Substantially all particles had a particle size between 0.6 and 1.4 mm.

75 grams of this silica gel carrier was dried at different temperatures during 2 hours.

Subsequently, the dried silica gel carriers thus obtained were contacted with a gas stream consisting of titaniumtetrachloride. The gas stream was obtained by heating titaniumtetrachloride to 200 °C with the help of an electrical heating system. The silica carrier was impregnated such as to obtain an impregnated carrier containing 3.63 %wt of titanium on total amount of impregnated carrier.

The impregnated catalysts thus obtained were calcined at 600 °C during 7 hours. The calcined catalysts were subsequently contacted with steam at 325 °C during 6 hours. The steam flow consisted of 3 grams of water per hour and 8 N1 of nitrogen per hour. Finally, the catalysts were silylated at 185 °C during 2 hours by being contacted with 18 grams of hexamethyldisilazane per hour in a nitrogen flow of 1.4 N1 per hour.

The catalytic performance of the titanium catalyst samples was measured at 80 °C in a batch test unit consisting of a fixed bed reactor containing 15 grams of catalyst, a feed vessel containing 180 grams of feed and a circulation pump. A mixture of octene and 36 %w ethylbenzene hydroperoxide in ethylbenzene was circulated through the catalyst bed at a constant rate of 5 kg/hr. The molar ratio of octene to ethylbenzene hydroperoxide was 2. The temperature of the feed vessel and catalytic bed was kept constant by means of circulating oil.

The converted octene was replaced by helium on pressure control. After 2 hours, the reaction mixture was analysed by on-line super critical fluid chromatography (SFC) to determine the selectivity of ethylbenzene hydroperoxide to octylene oxide.

In table 1, the selectivities are given for the catalysts derived from carriers dried at different temperature. The selectivity is the molar ratio of octylene oxide formed to ethylbenzene hydroperoxide converted.

**Table 1**

| | Drying temperature (°C) | Selectivity to octylene oxide(%) |
|---|---|---|
| Comparative catalyst A | 150 | 92.0 |
| Catalyst 1 | 225 | 92.2 |
| Catalyst 2 | 256 | 92.3 |
| Comparative catalyst B | 350 | 92.1 |

### Examples 3 and 4

Silica gel carriers as described in Examples 1 and 2 were dried at 250 °C during 2 hours.

Subsequently, the dried silica gel carriers thus obtained were contacted with a gas stream consisting of titaniumtetrachloride. The gas stream was obtained by heating titaniumtetrachloride to 200 °C with the help of an electrical heating system. Table 2 describes the molar ratio of total amount of titaniumtetrachloride led over the carrier to the amount of silicon present in the carrier. Further, the titanium loadings of the catalysts obtained are given in Table 2. The titanium loadings were determined by X-ray fluorescence methods. The catalysts have a similar titanium content while substantially different amounts of titaniumchloride were used. Without wishing to be bound to any theory, it is thought that the similar titanium content is caused by the similar number of silanol groups available in the carriers.

The impregnated carriers were treated further as described in Examples 1 and 2.

The selectivity of the catalysts thus obtained was measured in an epoxidation process as described in examples 1 and 2 with the exception that the feed contained propene instead of octene.

Table 2 gives analytical and performance data for the catalysts.

**Table 2**

| | Ti(% w) | TiCl₄/Si ratio | Selectivity to propylene oxide (%) |
|---|---|---|---|
| Catalyst 3 | 3.63 | 0.061 | 77.2 |
| Catalyst 4 | 3.65 | 0.074 | 72.1 |

It will be clear from Table 2 that a catalyst having a titanium to silicon molar ratio of 0.061 gives a catalyst having a higher selectivity than a catalyst having a titanium to silicon molar ratio of 0.074. This is very surprising in view of the larger amount of titaniumtetrachloride used in the preparation of the latter.

## Claims

1. Process for the preparation of an epoxidation catalyst, wherein the amount of titanium (as metallic titanium) is in the range of from 0.1 to 10% by weight, based on total weight of the catalyst, which process comprises:
(a) drying a silica gel carrier having a weight average particle size of from 0.1 to 2 millimetre and a surface area of at most 1000 m²/gram at a temperature of from 210 to 290 °C, wherein the drying is carried out during from 15 minutes up to 10 hours;
(b) contacting the carrier obtained in step (a) with a gas stream containing titanium halide to obtain an impregnated carrier;
(c) calcining the impregnated carrier,
(d) hydrolysing the calcined impregnated carrier, and
(e) contacting the carrier obtained in step (d) with a silylating agent.

2. Process according to claim 1, in which process the drying of step (a) is carried out at a temperature which is higher than the temperature at which the impregnation of step (b) is carried out.

3. Process according to any one of the preceding claims, in which process the amount of titanium halide supplied in step (b) is such that the molar ratio of titanium halide added to silicon present in the carrier is of from 0.050 to 0.063.

4. Process according to any one of the preceding claims, in which process the gas stream consists of titanium halide.

5. Process according to any one of the preceding claims, in which process the silica gel carrier has a surface area of at most 500 m²/g.

6. Process according to any one of the preceding claims in which process the silica gel carrier is dried during of from 1 to 8 hours.

7. Process for the preparation of alkylene oxide which process comprises contacting a hydroperoxide and alkene with a heterogeneous epoxidation catalyst and withdrawing a product stream comprising alkylene oxide and an alcohol and/or water, in which process the catalyst is prepared according to the process of any one of the preceding claims.

8. Process according to claim 7, in which process the alkene is propene and the alkylene oxide is propylene oxide.

9. Process according to claim 7 or 8, in which process the hydroperoxide is ethylbenzene hydroperoxide and in which the alcohol is 1-phenyl ethanol.

10. Process according to claim 9, which process further comprises dehydration of 1-phenylethanol to obtain styrene.

## Patentansprüche

1. Verfahren zum Herstellen eines Epoxidationskatalysators, wobei die Menge an Titan (als metallisches Titan) im Bereich von 0,1 bis 10 Gew.-%, basierend auf dem Gesamtgewicht des Katalysators, liegt, wobei das Verfahren Folgendes umfasst:
(a) Trocknen eines Silicagelträgers mit einer gewichtsmittleren Partikelgröße von 0,1 bis 2 Millimetern und einer Oberfläche von höchstens 1000 m²/Gramm bei einer Temperatur von 210 bis 290 °C, wobei das Trocknen während einer Zeitspanne von 15 Minuten bis zu 10 Stunden erfolgt;
(b) Kontaktieren des in Schritt (a) erhaltenen Trägers mit einem titanhalogenidhaltigen Gasstrom, um einen imprägnierten Träger zu erhalten;
(c) Kalzinieren des imprägnierten Trägers,
(d) Hydrolysieren des kalzinierten imprägnierten Trägers, und
(e) Kontaktieren des in Schritt (d) erhaltenen Trägers mit einem Silylierungsmittel.

2. Verfahren nach Anspruch 1, bei dem das Trocknen von Schritt (a) bei einer Temperatur erfolgt, die höher ist als die Temperatur, bei der die Imprägnierung von Schritt (b) erfolgt.

3. Verfahren nach einem der vorangehenden Ansprüche, bei dem die in Schritt (b) zugeführte Menge an Titanhalogenid so ist, dass das Molverhältnis von Titanhalogenid zu dem im Träger vorhandenen Silizium von 0,050 bis 0,063 liegt.

4. Verfahren nach einem der vorangehenden Ansprüche, bei dem der Gasstrom aus Titanhalogenid besteht.

5. Verfahren nach einem der vorangehenden Ansprüche, bei dem der Silicagelträger eine Oberfläche von höchstens 500 m²/g aufweist.

6. Verfahren nach einem der vorangehenden Ansprüche, bei dem der Silicagelträger innerhalb von 1 bis 8 Stunden getrocknet wird.

7. Verfahren zur Herstellung von Alkylenoxid, wobei das Verfahren das Kontaktieren eines Hydroperoxids und Alkens mit einem heterogenen Epoxidationskatalysator und das Entnehmen eines Produktstroms, umfassend Alkylenoxid und einen Alkohol und/oder Wasser, umfasst, wobei bei diesem Verfahren der Katalysator nach dem Verfahren eines der vorangehenden Ansprüche hergestellt wird.

8. Verfahren nach Anspruch 7, bei dem das Alken Propen ist und das Alkylenoxid Propylenoxid ist.

9. Verfahren nach Anspruch 7 oder 8, bei dem das Hydroperoxid Ethylbenzolhydroperoxid ist und bei dem der Alkohol 1-Phenylethanol ist.

10. Verfahren nach Anspruch 9, wobei das Verfahren ferner die Dehydrierung von 1-Phenylethanol zur Erhaltung von Styrol umfasst.

## Revendications

1. Procédé de préparation d'un catalyseur d'époxydation, dans lequel la quantité de titane (sous forme de titane métallique) est comprise entre 0,1 et 10 %, par rapport à la masse totale du catalyseur, ce procédé consistant à :
(a) sécher un support de gel de silice présentant une granulométrie moyenne en poids comprise entre 0,1 et 2 millimètres et une surface spécifique d'au plus 1000 m²/gramme à une température comprise entre 210 et 290°C, dans lequel le séchage est effectué pendant 15 minutes jusqu'à 10 heures ;
(b) mettre en contact le support obtenu à l'étape (a) avec un flux de gaz contenant de l'halogénure de titane pour obtenir un support imprégné ;
(c) calciner le support imprégné,
(d) hydrolyser le support imprégné calciné, et
(e) mettre en contact le support obtenu à l'étape (d) avec un agent de silylation.

2. Procédé selon la revendication 1, dans lequel le séchage de l'étape (a) est effectué à une température supérieure à la température à laquelle l'imprégnation de l'étape (b) est effectuée.

3. Procédé selon l'une quelconque des revendications précédentes, dans lequel la quantité d'halogénure de titane fournie à l'étape (b) est telle que le rapport molaire d'halogénure de titane ajouté au silicium présent dans le support est compris entre 0,050 et 0,063.

4. Procédé selon l'une des revendications précédentes, dans lequel le flux de gaz est constitué d'halogénure de titane.

5. Procédé selon l'une des revendications précédentes, dans lequel le support de gel de silice a une surface spécifique maximale de 500 m²/g.

6. Procédé selon l'une des revendications précédentes, dans lequel le support de gel de silice est séché pendant 1 à 8 heures.

7. Procédé de préparation d'oxyde d'alkylène, lequel procédé consiste à mettre en contact un hydroperoxyde et un alcène avec un catalyseur d'époxydation hétérogène et à extraire un flux de produit comprenant de l'oxyde d'alkylène et un alcool et/ou de l'eau, procédé dans lequel le catalyseur est préparé conformément au procédé selon l'une des revendications précédentes.

8. Procédé selon la revendication 7, dans lequel l'alcène est le propène et l'oxyde d'alkylène est l'oxyde de propylène.

9. Procédé selon la revendication 7 ou 8, dans lequel l'hydroperoxyde est l'hydroperoxyde d'éthylbenzène et dans lequel l'alcool est le 1-phényléthanol.

10. Procédé selon la revendication 9, lequel procédé consiste en outre à déshydrater le 1-phényléthanol pour obtenir du styrène.
